(19) Europäisches Patentamt / European Patent Office / Office européen des brevets

(11) **EP 4 545 591 B1**

(12) **EUROPEAN PATENT SPECIFICATION**

(45) Date of publication and mention
of the grant of the patent:
**18.02.2026 Bulletin 2026/08**

(21) Application number: **24208048.9**

(22) Date of filing: **22.10.2024**

(51) International Patent Classification (IPC):
**C08K 5/098** (2006.01)   **C08K 5/14** (2006.01)
**C08L 23/08** (2025.01)   **B32B 27/18** (2006.01)
**B32B 27/32** (2006.01)

(52) Cooperative Patent Classification (CPC):
(C-Sets available)
**C08K 5/098; C08K 5/14; C08L 23/0815;**
C08K 5/0025; C08K 5/005; C08K 2201/014   (Cont.)

(54) **CROSSLINKABLE POLYETHYLENE BLEND, PREPARATION METHOD AND USE THEREOF**

VERNETZBARE POLYETHYLENMISCHUNG, HERSTELLUNGSVERFAHREN UND
VERWENDUNG DAVON

MÉLANGE DE POLYÉTHYLÈNE RÉTICULABLE, SON PROCÉDÉ DE PRÉPARATION ET SON
UTILISATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.10.2023 CN 202311394253**

(43) Date of publication of application:
**30.04.2025 Bulletin 2025/18**

(73) Proprietor: **Wuhu Midea Smart Kitchen Appliance
Manufacturing Co., Ltd.
Wuhu, Anhui 241000 (CN)**

(72) Inventors:
• **WU, Junjun**
**Wuhu City (CN)**
• **Yong, YANG**
**Wuhu City (CN)**
• **Ruilun, SONG**
**Wuhu City (CN)**
• **Shen, Yongbing**
**Anhu, 241009 (CN)**

(74) Representative: **RGTH
Patentanwälte PartGmbB
Neuer Wall 10
20354 Hamburg (DE)**

(56) References cited:
**CN-A- 103 865 142    CN-B- 109 851 901
JP-A- 2002 244 250**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 51/06, C08K 5/14,
C08K 5/1345, C08K 5/098;
C08L 23/0815, C08L 63/00, C08K 5/14,
C08K 5/1345, C08K 5/098;
C08L 23/0815, C08L 67/06, C08K 5/14,
C08K 5/1345, C08K 5/098**

**Description**

**TECHNICAL FIELD**

The present invention belongs to the technical field of materials for a water heater, and particularly, the present invention relates to a crosslinkable polyethylene blend, a preparation method and use thereof.

**BACKGROUND**

At present, enamel tanks are adopted as tanks of electric water heaters and solar water heaters. Steel plates of the enamel tanks are prone to hydrogen evolution, which may result in fish scale explosion. Thus, the tanks have poor surface adhesion, and shrinkage holes or sand holes may appear at the welding line. The enamel tanks are brittle and easily damaged during handling, and thus it is necessary to use magnesium rod to protect the tanks. However, during the use of magnesium rods, magnesium slag is easily generated, which can accelerate the formation of scale, causing pollution to water quality and leading to skin irritation for users after long-term use. In order to solve the above-mentioned problems, in the related art, a steel-plastic composite tank is prepared with cross-linked polyethylene (PEX) through rotation-molding, and it has both the bearing capacity of steel and the corrosion resistance of a PEX inner lining layer, omitting a magnesium rod for protection, thereby providing better water quality. CN109851901A describes such a cross-linked polyethylene roll plastic for the inner tank of a water heater which comprises a mixture of linear low-density polyethylene and metallocene polyethylene; maleic anhydride, peroxide crosslinking agent; antibacterial agent; cross-linking assistant; antioxidant; and a lubricant including zinc stearate. However, the PEX raw material currently used for rotation-molding of steel liners has the following problems: 1) due to the poor polarity of raw materials, the adhesion strength between the steel-plastic composite and the PEX inner lining layer is still low and prone to delamination even performing complex surface treatment such as hyperphosphorylation on the surface of the steel materials; and 2) the conventional PEX raw materials for rotation-molding mostly use a peroxide crosslinking agent (such as diisopropylbenzene peroxide DCP), and the peroxide crosslinking agent may decompose after a crosslinking reaction to generate an irritating odor, which is not only unpleasant but also harmful to the human body, which has to be urgently solved in the related art.

**SUMMARY**

The present invention aims to solve one of the technical problems existing in the related art at least to some extent. Therefore, the purpose of the present invention is to provide a crosslinkable polyethylene blend, a preparation method and use thereof. According to the present invention, the problem of the production of irritating odor accompanied with the decomposition of a peroxide crosslinking agent is solved by adding a deodorant to a crosslinkable polyethylene blend, enabling a PEX inner lining layer to meet the sanitary and safety requirements on water heater tanks. At the same time, according to the present invention, by adding a polar material into the crosslinkable polyethylene blend, an adhesion between a polyethylene matrix resin and a metal outer lining is enhanced, avoiding the occurrence of delamination during use, thereby meeting the service life requirements on water heater tanks.

In an aspect, the present invention provides a crosslinkable polyethylene blend. According to an embodiment of the invention, the crosslinkable polyethylene blend comprises 80 to 120 parts by weight of a polyethylene base resin, 2 to 15 parts by weight of a polar material, 0.1 to 5 parts by weight of a peroxide crosslinking agent, 0.1 to 1 part by weight of an antioxidant, and 0.5 to 2 parts by weight of a deodorant, the deodorant comprising a mixture of a manganese-based organic acid salt, a zinc-based organic acid salt, and a rare earth-based organic acid salt.

For the crosslinkable polyethylene blend according to the embodiment of the present invention, the problem of the production of irritating odor accompanied with the decomposition of the peroxide crosslinking agent is solved by adding the deodorant to the crosslinkable polyethylene blend, enabling the PEX inner lining layer to meet the sanitary and safety requirements on water heater tanks. At the same time, according to the present invention, by adding the polar material into the crosslinkable polyethylene blend, an adhesion between a polyethylene matrix resin and a metal outer lining is enhanced. In this way, the metal outer lining can achieve the required adhesion strength after a simple degreasing step, without performing complicated treatments such as sandblasting, acid washing, phosphating, etc., and a peel strength between the metal outer lining and the PEX inner lining layer can reach 285 N/cm to 380 N/cm. In addition, no delamination occurs during the use, thereby meeting the service life requirements on the water heater tank.

In addition, the crosslinkable polyethylene blend according to the above-mentioned embodiment of the present invention may also have the following additional technical features.

Optionally, a mass ratio of the manganese-based organic acid salt, the zinc-based organic acid salt, and the rare earth-based organic acid salt is (55-65): (25-35): (8-12).

Optionally, the peroxide crosslinking agent comprises at least one of bis(tert-butyldioxyisopropyl)benzene,

EP 4 545 591 B1

diisopropylbenzene peroxide, 2,5-dimethyl-2,5-di(tert-butylperoxy)hexane, and di-tert-butyl peroxide.

Optionally, the manganese-based organic acid salt comprises at least one of manganese lactate, manganese octadecanoate, and manganese neodecanoate.

Optionally, the zinc-based organic acid salt comprises at least one of zinc lactate, zinc citrate, and zinc diricinoleate.

Optionally, the rare earth-based organic acid salt comprises at least one of rare earth stearate, rare earth salicylate, and rare earth citrate.

Optionally, the polar material comprises at least one of isocyanate-, acrylate-, unsaturated carboxylic acid-, anhydride- or ester derivative-grafted polyolefin, epoxy resin, and unsaturated polyester resin.

Optionally, the antioxidant comprises at least one of pentaerythritol tetrakis [β-(3,5-di-tert-butyl-4-hydroxy-phenyl)propionate] and 4,4'-thiobis-(6-tert-butyl-3-methyl)phenol.

In another aspect, the present invention provides a water heater tank. According to an embodiment of the present invention, the water heater tank comprises a metal outer lining and a PEX inner lining layer disposed on and closely attached to an inner side of the metal outer lining. The PEX inner lining layer is formed by heat crosslinking the crosslinkable polyethylene blend of the above-mentioned embodiments. Thus, the PEX inner lining layer of the water heater tank has a light odor and can meet the sanitary and safety requirements on bathing water. At the same time, the adhesion between the metal outer lining and the PEX inner lining layer of the water heater tank is strong, and no delamination occurs during the use, which meets the service life requirement on the water heater tank.

In addition, the crosslinkable polyethylene blend according to the above-mentioned embodiments of the present invention may also have the following additional technical features:

Optionally, a peel strength between the metal outer lining and the PEX inner lining layer ranges from 285N/cm-380N/cm.

Optionally, a crosslinking degree of the PEX inner lining layer ranges from 72% to 76%.

In a third aspect of the present invention, a method of preparing the water heater tank described above is proposed. According to an embodiment of the present invention, the method comprises: (1) pre-treating the metal outer lining; and (2) loading the crosslinkable polyethylene blend onto the inner side of the metal outer lining, placing into a rotational molding machine, and rotation-molding the crosslinkable polyethylene blend, to form the PEX inner lining layer on the inner side of the metal outer lining.

For the method of preparing the water heater tank according to the embodiment of the present invention, the water heater tank prepared by this method has excellent resistance to high temperature, boiling resistance and wet and heat resistance, and it can also effectively prevent the oxidation and corrosion of the substrate at a high temperature; in the meantime, the water heater tank prepared by this method also has excellent anti-fingerprint performance, i.e., no fingerprint of finger touch remains, and oil stains are easy to clean. Moreover, the preparation method is simple and convenient.

In addition, the method of preparing the water heater tank according to the above-mentioned embodiments of the present invention may also have the following additional technical features:

In some embodiments of the present invention, a temperature for rotation-molding ranges from 220°C to 280°C, and a time for rotation-molding ranges from 15 min to 35 min.

In a fourth aspect, the present invention provides a water heater. According to an embodiment of the present invention, the water heater has the water heater tank of the above-mentioned embodiments or the water heater tank prepared by the method of the above-mentioned embodiments. Thus, the water heater has all the advantages of the water heater tank of the above-mentioned embodiments, in particular, the PEX inner lining layer of the water heater tank has a light odor and can meet the sanitary and safety requirements for bath water; at the same time, the adhesion between the metal outer lining and the PEX inner lining layer of the water heater tank is strong, and thus no delamination occurs during the use, thereby meeting the service life requirements on the water heater tank and further meeting the needs of consumers.

Additional aspects and advantages of the present invention will be set forth in part in the description which follows and, in part, will be apparent from the description, or may be learned by practice of the present invention.

## BRIEF DESCRIPTION OF THE DRAWINGS

The foregoing and/or additional aspects and advantages of the present invention will become apparent and readily appreciated from the following description of the embodiments, taken in conjunction with the accompanying drawings of which:

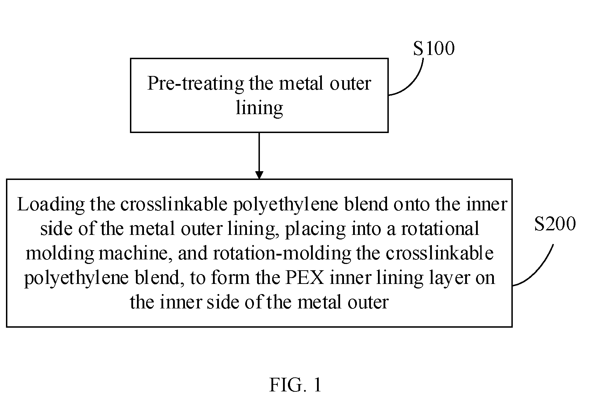

Fig. 1 is a schematic flow chart of a method of preparing a water heater tank according to an embodiment of the present invention.

4

## DETAILED DESCRIPTION

Embodiments of the present invention are described in detail below. Examples of the embodiments are illustrated in the accompanying drawing, in which the same or similar reference numerals refer to the same or similar elements or elements with the same or similar functions throughout the several views. The embodiments described below with reference to the figures are exemplary and are intended to be illustrative of the present invention.

In an aspect, the present invention provides a crosslinkable polyethylene blend. According to an embodiment of the invention, the crosslinkable polyethylene blend includes 80 to 120 parts by weight of a polyethylene base resin, 2 to 15 parts by weight of a polar material, 0.1 to 5 parts by weight of a peroxide crosslinking agent, 0.1 to 1 part by weight of an antioxidant, and 0.5 to 2 parts by weight of a deodorant, the deodorant including a mixture of a manganese-based organic acid salt, a zinc-based organic acid salt, and a rare earth-based organic acid salt. Thus, according to the present invention, the problem of the production of irritating odor accompanied with the decomposition of the peroxide crosslinking agent is solved by adding the deodorant to the crosslinkable polyethylene blend, enabling the PEX inner lining layer to meet the sanitary and safety requirements on water heater tanks. At the same time, according to the present invention, by adding the polar material into the crosslinkable polyethylene blend, an adhesion between a polyethylene matrix resin and a metal outer lining is enhanced. In this way, the metal outer lining can achieve the required adhesion strength after a simple degreasing step, without performing complicated treatments such as sandblasting, acid washing, phosphating, etc., and a peel strength between the metal outer lining and the PEX inner lining layer can reach 285 N/cm to 380 N/cm. In addition, no delamination occurs during the use, thereby meeting the service life requirements on the water heater tank.

The principle by which the water heater tank according to the present invention can achieve the above-mentioned advantageous effects is described in detail as follows:

In the related art, a steel-plastic composite tank is prepared with cross-linked polyethylene (PEX) through rotation-molding, and it has both the bearing capacity of steel and the corrosion resistance of a PEX inner lining layer, omitting a magnesium rod for protection, thereby providing better water quality. In the process of forming PEX inner lining layer, since the heat resistance of polyethylene base resin cannot meet the use standard of water heater, it is necessary to use peroxide crosslinking agent to promote the crosslinking reaction of polyethylene base resin under certain conditions to form crosslinked polyethylene liner. However, after the cross-linking reaction, the peroxide crosslinking agent decomposes to generate an irritating odor, which is not only unpleasant but also harmful to the human body. For example, DCP is easily decomposed into acetophenone, methane, 2-phenylisopropanol and other gases, especially acetophenone may cause severe irritation to human eyes or respiratory tract, and BIBP can be easily decomposed into tert-butyl alcohol, acetone and other vapors. It is urgent to solve these problems in the art, and those skilled in the art have tried a wide variety of methods, none of which effectively solves the problem of irritating odors.

In order to solve the above-mentioned technical problem, in the present invention, the crosslinkable polyethylene blend is added with a deodorant, which includes a mixture of a manganese-based organic acid salt, a zinc-based organic acid salt and a rare earth-based organic acid salt. The deodorant can undergo an irreversible coordination complex reaction with alcohol molecules, ammonia molecules, sulfhydryl molecules, and a ketone compound, etc., of the odor source, thereby forming coordination bonds and generating non-toxic and odorless macromolecular coordination complexes, which are not volatile and have a high boiling point. In this way, various types of odor molecules can be completely removed, and particularly, the deodorant has unique effects on the odor generated by the decomposition of the peroxide crosslinking agent. For example, the above-mention deodorant can undergo, by forming coordination bonds, reversible coordination complexation reaction with acetophenone, methane, 2-phenylisopropanol and other gases that are produced by decomposition after the DCP cross-linking reaction, or with tert-butanol, acetone and other vapors that are produced by BIBP decomposition, thereby generating a non-toxic and odorless macromolecular coordination complexes that are is not volatile and have high boiling points. In this way, various odor molecules generated by the decomposition of the peroxide crosslinking agent can be removed. In addition, the metal salt deodorant also catalyzes the decomposition of some of the odor molecules. Thus, according to the present invention, the problem of the production of irritating odor accompanied with the decomposition of the peroxide crosslinking agent is solved by adding the deodorant to the crosslinkable polyethylene blend, enabling the PEX inner lining layer to meet the sanitary and safety requirements on water heater tanks.

It should be noted that the manganese-based organic acid salt, the zinc-based organic acid salt, and the rare earth-based organic acid salt act synergistically with one another to achieve the above-mentioned technical effects, and the technical effects of the present invention cannot be achieved without any one of them.

In addition, in the related art, the cross-linked PEX inner lining layer has poor polarity. Even if the surface of the steel material is subjected to a complicated surface treatment such as phosphating, the adhesion strength between the steel-plastic composite and the PEX inner lining layer is still relatively low, and prone to delamination. In order to solve such a technical problem, a polar material is added into the crosslinkable polyethylene blend according to the present invention. The polar material has a polar group, which can react with a hydroxyl group on the metal outer lining to form a chemical bond, thereby improving the adhesion between the PEX inner lining layer and the metal outer lining. In this way, the metal outer lining can achieve the required adhesion strength after a simple degreasing step, without performing complicated treatments such as sandblasting, acid washing, phosphating, etc., and a peel strength between the metal outer lining and the PEX inner lining layer can reach 285 N/cm to 380 N/cm. In addition, no delamination occurs during the use, thereby meeting the service life requirements on the water heater tank.

In the embodiment of the present invention, when the above-mentioned crosslinkable polyethylene blend undergoes a cross-linking reaction at an inner side of the metal outer lining, a cross-linking reaction occurs on the polyethylene base resin itself under the action of the peroxide crosslinking agent to form a cross-linked polyethylene inner lining, and when the polar material is selected from high molecular materials (e.g., isocyanate-, acrylate-, unsaturated carboxylic acid-, anhydride- or ester derivative-grafted polyolefin, epoxy resin, and unsaturated polyester resin, etc.), a cross-linking reaction can occur between the polyethylene base resin and the polar material. The antioxidant functions to prevent oxidative aging of the PEX inner lining layer.

According to some specific embodiments of the present invention, a mass ratio of the manganese-based organic acid salt, the zinc-based organic acid salt, and the rare earth-based organic acid salt may be (55-65): (25-35): (8-12). By limiting the mass ratio of the manganese-based organic acid salt, the zinc-based organic acid salt, and the rare earth-based organic acid salt in the range of (55-65): (25-35): (8-12), the effect of scavenging various types of odor molecules generated by decomposition of the peroxide crosslinking agent can be further ensured. Preferably, the mass ratio of the manganese-based organic acid salt, the zinc-based organic acid salt, and the rare earth-based organic acid salt is 60: 30: 10.

In the embodiments of the present invention, the specific type of the peroxide crosslinking agent is not particularly limited, as long as it can promote the crosslinking reaction of the polyethylene base resin at a specific temperature. As some specific examples, the peroxide crosslinking agent includes at least one of bis(tert-butyldioxyisopropyl)benzene (BIBP), diisopropylbenzene peroxide (DCP), 2,5-dimethyl-2,5-di(tert-butylperoxy)hexane, and di-tert-butyl peroxide. The above-mentioned types of peroxide crosslinking agents can all enable the crosslinking degree of the PEX inner lining layer to be higher than 70%, such that the PEX inner lining layer can meet the requirement of long-period use at 80 degrees centigrade. Bis(tert-butyldioxyisopropyl)benzene (BIBP) is preferred, because bis(tert-butyldioxyisopropyl)benzene (BIBP) when heated may decompose to produce a small amount of tert-butyl alcohol, acetone vapor, which can undergo an irreversible coordination complex reaction with the deodorant (i.e., the mixture of the manganese-based organic acid salt, the zinc-based organic acid salt, and the rare earth-based organic acid salt), etc. to form a coordination bond. Thus, non-toxic and odorless macromolecular coordination complexes can be formed, which are not volatile and have high boiling points. Therefore, the vapor produced by the decomposition of BIBP can be completely removed. In the present invention, BIBP is used in combination with the deodorant, and the deodorant effect is good. DCP crosslinking agent may produce a large amount of acetophenone, methane, 2-phenylisopropanol, etc., by decomposition in the process of heating, and especially acetophenone can cause severe irritation to human eyes or respiratory tract.

In the embodiments of the present invention, the specific kind of the above-mentioned manganese-based organic acid salt is not particularly limited. As some specific examples, the manganese-based organic acid salt includes at least one of manganese lactate, manganese octadecanoate, and manganese neodecanoate.

In the embodiments of the present invention, the specific kind of the above-mentioned zinc-based organic acid salt is not particularly limited. As some specific examples, the zinc-based organic acid salt includes at least one of zinc lactate, zinc citrate, and zinc diricinoleate.

In the embodiments of the present invention, the specific kind of the above-mentioned rare earth-based organic acid salt is not particularly limited. As some specific examples, the rare earth-based organic acid salt includes at least one of rare earth stearate, rare earth salicylate, and rare earth citrate. The rare earth stearate includes at least one of cerium stearate and lanthanum stearate. The rare earth salicylate includes at least one of cerium salicylate and lanthanum salicylate. The rare earth citrate includes at least one of cerium citrate and lanthanum citrate.

In the embodiments of the present invention, the specific kind of the above-mentioned polar material is not particularly limited. As some specific examples, the polar material includes, but is not limited to, at least one of isocyanate-, acrylate-, unsaturated carboxylic acid-, anhydride- or ester derivative-grafted polyolefin, epoxy resin, and unsaturated polyester resin. The epoxy resin and unsaturated polyester resin both contain polar groups, which can react with hydroxyl groups on the metal outer lining to form chemical bonds, thereby improving the adhesion between the PEX inner lining layer and the metal outer lining. The polar material formed by grafting isocyanate, acrylate, unsaturated carboxylic acid, anhydride or ester derivative onto polyolefin also contains polar groups, which can also react with hydroxyl groups on the metal outer lining to generate chemical bonds, thereby improving the adhesion between the PEX inner lining layer and the metal outer lining. The grafting yield on the polyolefin is also not particularly limited and is generally chosen between 1% and 10%.

In the embodiments of the present invention, the specific kind of the above-mentioned antioxidant is not particularly limited. As some specific examples, the antioxidant includes, but is not limited to, at least one of pentaerythritol tetrakis [β-(3,5-di-tert-butyl-4-hydroxy-phenyl)propionate] and 4,4'-thiobis-(6-tert-butyl-3-methyl)phenol.

In another aspect, the present invention provides a water heater tank. According to an embodiment of the present invention, the water heater tank includes a metal outer lining and a PEX inner lining layer disposed on and closely attached to an inner side of the metal outer lining, the PEX inner lining layer being formed by heat crosslinking the crosslinkable polyethylene blend of the above-mentioned embodiments. Thus, the PEX inner lining layer of the water heater tank has a light odor and can meet the sanitary and safety requirements on bathing water. At the same time, the adhesion between the metal outer lining and the PEX inner lining layer of the water heater tank is strong, and no delamination occurs during use, thereby meeting the service life requirement on the water heater tank.

Specifically, the metal outer lining can achieve the required adhesion strength after a simple degreasing step, without performing complicated treatments such as sandblasting, acid washing, phosphating, etc., and a peel strength between the metal outer lining and the PEX inner lining layer can reach 285 N/cm to 380 N/cm.

In the embodiment of the present invention, the specific kind of the above-mentioned metal outer lining is not particularly limited, and the metal outer lining may be, for example, a carbon steel outer lining.

According to some particular embodiments of the invention, the PEX inner lining layer can have a cross-linking degree in the range of 72% to 76%, enabling the PEX inner lining layer to meet the requirement of use at 80 degrees centigrade for a long period of time.

As some specific examples, the PEX inner lining layer has a thickness ranging from 2 mm to 4 mm. The thickness of the metal outer lining is not particularly limited.

In a third aspect, the present invention provides a method of preparing the above-mentioned water heater tank. According to an embodiment of the present invention, with reference to Fig. 1, the method includes the following steps.

S100: the metal outer lining is pre-treated.

In this step, the metal outer lining is pre-treated to remove greasy dirt and rust from the surface of the metal outer lining, allowing the PEX inner lining layer to be well bond to the metal outer lining.

S200: the crosslinkable polyethylene blend is loaded onto an inner side of the metal outer lining, placed into a rotational molding machine, and rotation-molded to form the PEX inner lining layer on the inner side of the metal outer lining.

According to some specific embodiments of the invention, a temperature of the rotation-molding can range from 220°C to 280°C (e.g., 220°C, 230°C, 240°C, 250°C, 260°C, 270°C, or 280°C, etc.) and a time of said rotation-molding may range from 15 min to 35 min (e.g., 15 min, 20 min, 25 min, 30 min, or 35 min).

Prior to loading the crosslinkable polyethylene blend onto the inner side of the metal outer lining, the polyethylene base resin, the polar material, the peroxide crosslinking agent, the antioxidant and the deodorant are melt-blended (e.g., in a twin-screw extruder) at a temperature of 130°C to 150°C and then pelletized to obtain the crosslinkable polyethylene blend.

According to the method of preparing the above-mentioned water heater tank according to an embodiment of the present invention, the prepared PEX inner lining layer of the water heater tank has a light odor and can meet the sanitary and safety requirements on bath water. At the same time, the adhesion between the metal outer lining and the PEX inner lining layer of the water heater tank is strong, and no delamination occurs during use, thereby meeting the service life requirement on the water heater tank. The preparation method is simple and easy to implement.

In a fourth aspect, the present invention provides a water heater. According to an embodiment of the present invention, the water heater includes the water heater tank of the above-mentioned embodiments or a water heater tank prepared by the method of the above-mentioned embodiments. Thus, the water heater has all the advantages of the water heater tank of the above-mentioned embodiments, and particularly, the PEX inner lining layer of the water heater tank has a light odor and can meet the sanitary and safety requirements on bath water; and at the same time, the adhesion between the metal outer lining and the PEX inner lining layer of the water heater tank is strong, and no delamination occurs during the use, thereby meeting the service life requirements on the water heater tank and further meeting the needs of consumers.

Specifically, the above-mentioned water heater may be an electric water heater, a solar water heater, or the like.

The embodiments of the present invention are described in detail below. It should be noted that the embodiments described below are illustrative and are intended to explain the present invention, and they shall not to be construed as limitations of the present invention. Additionally, all reagents employed in the following embodiments are either commercially available or can be synthesized according to methods herein or known, and they are readily available to those skilled in the art for reaction conditions not listed, unless explicitly indicated.

**Example 1**

The present example provides a water heater tank, and the preparation method thereof includes the following steps.

1) 100 g of a linear low density polyethylene LLDPE1802, 1 g of a peroxide crosslinking agent BIBP, 5 g of an unsaturated polyester resin HS8706, 0.1 g of an antioxidant Irganox 1010, and 0.5 g of a deodorant were extruded through a twin-screw extruder at 140°C, 75 rpm, then pelletized and ground to obtain a crosslinkable polyethylene blend; the deodorant was a mixture of manganese lactate, zinc diricinoleate, and cerium citrate in a mass ratio of 60: 30: 10.

2) Greasy dirt and rust removal was performed on a carbon steel welded tank.

3) The crosslinkable polyethylene blend was loaded on an inner side of the carbon steel outer lining and rotation-molded in a rotational molding machine at a temperature of 230°C with a heating for 25 min, and then cooling was performed for 15 min, to form a PEX inner lining layer at the inner side of the carbon steel outer lining.

**Example 2**

Example 2 differed from Example 1 in that:

1) 100 g of a linear low density polyethylene LLDPE1802, 1g of a peroxide crosslinking agent BIBP, 8g of an epoxy resin E12, 0.1g of an antioxidant Irganox 1010, and 1g of a deodorant were extruded through a twin-screw extruder at 140 °C, 75 rpm, then pelletized and ground to obtain a crosslinkable polyethylene blend; the deodorant was a mixture of manganese lactate, zinc diricinoleate and cerium citrate in a mass ratio of 60: 30: 10.

Other steps were the same as those in Example 1.

**Example 3**

Example 3 differed from Example 1 in that:

1) 100 g of a linear low density polyethylene LLDPE1802, 1 g of a peroxide crosslinking agent BIBP, 10 g of an epoxy resin E12, 0.1 g of an antioxidant Irganox 1010, and 1.5 g of a deodorant were extruded through a twin-screw extruder at 140°C, 75 rpm, then pelletized and ground to obtain a crosslinkable polyethylene blend; the deodorant was a mixture of manganese lactate, zinc diricinoleate and cerium citrate in a mass ratio of 60: 30: 10.

Other steps were the same as those in Example 1.

**Example 4**

1) 100 g of a linear low density polyethylene LLDPE1802, 1g of a peroxide crosslinking agent BIBP, 8g of a maleic anhydride-grafted polyolefin MA-LLDPE (with a grafting ratio of 1.2 wt%), 0.1g of an antioxidant Irganox 1010, and 2g of a deodorant were extruded through a twin-screw extruder at 140°C, 75 rpm, then pelletized and ground to obtain a crosslinkable polyethylene blend; the deodorant was a mixture of manganese lactate, zinc diricinoleate, and cerium citrate in a mass ratio of 60:30:10.

Other steps were the same as those in Example 1.

**Example 5**

1) 80 g of a linear low density polyethylene LLDPE1802, 2 g of a peroxide crosslinking agent BIBP, 10 g of an epoxy resin E12, 0.5 g of an antioxidant Irganox 1010, and 1.5 g of a deodorant were extruded through a twin-screw extruder at 140°C, 75 rpm, then pelletized and ground to obtain a crosslinkable polyethylene blend; the deodorant was a mixture of manganese octadecanoate, zinc lactate, and cerium salicylate in a mass ratio of 55: 35: 8.

Other steps were the same as those in Example 3.

**Example 6**

1) 120 g of a linear low density polyethylene LLDPE1802, 4 g of a peroxide crosslinking agent BIBP, 10 g of an epoxy resin E12, 1 g of an antioxidant Irganox 1010, and 1.5 g of a deodorant were extruded through a twin-screw extruder at 140°C, 75 rpm, then pelletized and ground to obtain a crosslinkable polyethylene blend; the deodorant was a mixture of manganese neodecanoate, zinc citrate, and cerium stearate in a mass ratio of 65: 25: 12.

Other steps were the same as those in Example 3.

### Example 7

1) 100 g of a linear low density polyethylene LLDPE1802, 1 g of a peroxide crosslinking agent DCP, 10 g of an epoxy resin E12, 0.1 g of an antioxidant Irganox 1010 and 1.5 g of a deodorant were extruded through a twin-screw extruder at 140°C, 75 rpm, then pelletized and ground to obtain a crosslinkable polyethylene blend; the deodorant was a mixture of manganese lactate, zinc diricinoleate, and cerium citrate in a mass ratio of 60:30:10.

Other steps were the same as those in Example 4.

### Comparative Example 1

In this comparative example, no deodorant was added, and the other were the same as those in Example 3.

### Comparative Example 2

In this comparative example, no epoxy resin E12 was added, and the other were the same as those in Example 3.

### Comparative Example 3

In this comparative example, no deodorant was added, and the other were the same as those in Example 7.
The data for the components of Examples 1 to 7 and Comparative Examples 1 to 3 are shown in Table 1.

[Table 1]

| | | LLDPE1802 (g) | BIBP (g) | DCP (g) | HS8706 | MA-LLDPE (g) | E12 (g) | Irganox 1010 (g) | Deodorant (g) |
|---|---|---|---|---|---|---|---|---|---|
| | Example 1 | 100 | 1 | / | 5 | / | / | 0.1 | 0.5 |
| | Example 2 | 100 | 1 | / | / | / | 8 | 0.1 | 1 |
| | Example 3 | 100 | 1 | / | / | / | 10 | 0.1 | 1.5 |
| | Example 4 | 100 | 1 | / | / | 8 | / | 0.1 | 2 |
| | Example 5 | 80 | 2 | / | / | / | 10 | 0.5 | 1.5 |
| | Example 6 | 120 | 4 | / | / | / | 10 | 1 | 1.5 |
| | Example 7 | 100 | / | 1 | / | / | 10 | 0.1 | 1.5 |
| | Comparative Example 1 | 100 | 1 | / | / | / | 10 | 0.1 | / |
| | Comparative Example 2 | 100 | 1 | / | / | / | / | 0.1 | 1 |
| | Comparative Example 3 | 100 | / | 1 | / | / | 10 | 0.1 | / |

The crosslinking degrees of the PEX inner lining layers of Examples 1 to 7 and Comparative Examples 1 to 3 were determined according to ASTM D 2765. The test method was as follows: a PEX sample block with a mass W1 (about 0.3 g) was cut off from the tank and cut into pieces, and put into a 100 mL stainless steel mesh (the specification of mesh can refer to the requirement in ASTM D 2765); the sample was extracted in xylene solution at 170°C for 24 h and then taken out, and then dried in a vacuum drying oven at 90°C for 6 h, and the mass was weighed as W2.

Crosslinking degree was calculated based on: crosslinking degree% = (W2/W1)×100%.

The peel strengths (N/cm) of the PEX inner lining layers of Examples 1 to 7 and Comparative Examples 1 to 3 were measured according to GB/T23257-2017. The test method was as follows: a strip with a width of 1 cm and a length greater than 20 cm was scratched in the PEX inner lining layer of the tank article to the depth of the metal part. One end of the strip was peeled off from the metal part by at least 2 cm, the peeled strip was pulled with a pulling machine at a speed of 10 mm/min; the stress value of tensile machine was read; after the tensile force was stable, the average value of the tensile force was taken as the peel strength.

The odor test method was as follows: five odor testers testes odor $N_0$ just produced from the tank, odor $Ng_{24}$ after standing in air for 24 hours, odor $Ng_{48}$ after standing in air for 48 hours, and odor $N_w$ after water treatment, and the odor was divided into 6 grades: 1 = no unpleasant odor, 2 = slight odor, 3 = odor, but not irritating, 4 = irritating odor, 5 = strong irritating odor, 6 intolerable odor. Then, the average value of the odor grades measured by the five odor testers was calculated based on: odor grade N = (N1+N2+N3+N4+N5)/5, and the measurement results are shown in Table 2.

[Table 2]

| | Crosslinking degree (%) | Peel strength (N/cm) | $N_0$ | $Ng_{24}$ | $Ng_{48}$ | $N_w$ |
|---|---|---|---|---|---|---|
| Example 1 | 72.1 | 287.5 | 1.8 | 1.5 | 1.3 | 1.3 |
| Example 2 | 73.2 | 340.8 | 1.2 | 1.0 | 1.2 | 1.2 |
| Example 3 | 75.4 | 376.6 | 1.4 | 1.2 | 1.2 | 1.0 |
| Example 4 | 74.9 | 359.4 | 2.2 | 1.6 | 1.2 | 1.4 |
| Example 5 | 77.9 | 372.1 | 2.1 | 1.5 | 1.2 | 1.0 |
| Example 6 | 79.5 | 369.6 | 2.6 | 2.1 | 2.0 | 1.3 |
| Example 7 | 74.5 | 377.8 | 3.2 | 2.5 | 2.2 | 1.5 |
| Comparative Example 1 | 73.8 | 366.5 | 5.6 | 3.1 | 2.5 | 2.1 |
| Comparative Example 2 | 75.1 | <200 | 1.5 | 1.3 | 1.1 | 1.1 |
| Comparative Example 3 | 74.3 | 368.2 | 6.0 | 4.5 | 4.0 | 3.2 |

Table 1 indicates that: for the PEX inner lining layers of Examples 1 to 7, the crosslinking degrees were all above 72.1%, the peel strengths were all above 287.5 N/cm, the odors $N_0$ just produced by the inner linings were all below grade 3.2, the odors $Ng_{24}$ after standing in air for 24 hours were all below grade 2.5, the odors $Ng_{48}$ after standing in air for 48 hour were all below grade 2.2, and the odors $N_w$ after water treatment were all below grade 1.5, meeting the hygiene and safety requirements for the water heater tank.

In comparison with Comparative Example 1, the tank prepared in Example 3 had significantly reduced odor in respective states, indicating the significant deodorizing effect of the addition of the deodorant.

Compared to Example 7, the odor of the tank prepared in Example 3 was significantly lower in respective states, indicating that the odor of the tank using BIBP as peroxide crosslinking agent was significantly lower in respective states.

Compared with Comparative Example 2, the peel strength of the PEX inner lining layer prepared in Example 3 was significantly improved, indicating that the peel strength of the PEX inner lining layer was significantly enhanced by adding the polar material, meeting the service life requirements on the water heater tank.

In comparison with Comparative Example 3, the tank prepared in Example 7 had significantly reduced odor in respective states, indicating the significant deodorizing effect of the addition of the deodorant.

In the specification, references to descriptions of the terms "an embodiment", "some embodiments", "examples", "specific examples", or "some examples", etc. mean that a particular feature, structure, material, or characteristic described in connection with the embodiment or example is included in at least one embodiment or example of the present invention. In this specification, schematic representations of the above-mentioned terms are not necessarily directed to the same embodiment or example. Furthermore, the particular features, structures, materials, or characteristics described may be combined in any suitable manner in any one or more embodiments or examples. Furthermore, integrations and combinations of the various embodiments or examples and features of the various embodiments or examples described in this specification can be made by those skilled in the art without mutual conflict.

**Claims**

1.  A crosslinkable polyethylene blend comprising:

    80 to 120 parts by weight of a polyethylene base resin;
    2 to 15 parts by weight of a polar material;
    0.1 to 5 parts by weight of a peroxide crosslinking agent;
    0.1 to 1 part by weight of an antioxidant; and
    0.5 to 2 parts by weight of a deodorant, wherein the deodorant comprises a mixture of a manganese-based organic acid salt, a zinc-based organic acid salt, and a rare earth-based organic acid salt.

2.  The crosslinkable polyethylene blend according to claim 1, wherein a mass ratio of the manganese-based organic acid salt, the zinc-based organic acid salt, and the rare earth-based organic acid salt is (55-65): (25-35): (8-12).

3.  The crosslinkable polyethylene blend according to claim 1 or 2, wherein the peroxide crosslinking agent comprises at least one of bis(tert-butyldioxyisopropyl)benzene, diisopropylbenzene peroxide, 2,5-dimethyl-2,5-di(tert-butylperoxy)hexane, and di-tert-butyl peroxide.

4.  The crosslinkable polyethylene blend according to any one of claims 1 to 3, wherein the manganese-based organic acid salt comprises at least one of manganese lactate, manganese octadecanoate, and manganese neodecanoate.

5.  The crosslinkable polyethylene blend according to any one of claims 1 to 4, wherein the zinc-based organic acid salt comprises at least one of zinc lactate, zinc citrate, and zinc diricinoleate.

6.  The crosslinkable polyethylene blend according to any one of claims 1 to 5, wherein the rare earth-based organic acid salt comprises at least one of rare earth stearate, rare earth salicylate, and rare earth citrate.

7.  The crosslinkable polyethylene blend according to any one of claims 1 to 6, wherein the polar material comprises at least one of isocyanate-, acrylate-, unsaturated carboxylic acid-, anhydride- or ester derivative-grafted polyolefin, epoxy resin, and unsaturated polyester resin.

8.  The crosslinkable polyethylene blend according to any one of claims 1 to 7, wherein the antioxidant comprises at least one of pentaerythritol tetrakis [β-(3,5-di-tert-butyl-4-hydroxy-phenyl)propionate] and 4,4'-thiobis-(6-tert-butyl-3-methyl)phenol.

9.  A water heater tank, comprising:

    a metal outer lining; and
    a PEX inner lining layer disposed on and closely attached to an inner side of the metal outer lining, the PEX inner lining layer being formed by heat crosslinking a crosslinkable polyethylene blend according to any one of claims 1 to 8.

10. The water heater tank according to claim 9, wherein a peel strength between the metal outer lining and the PEX inner lining layer ranges from 285 N/cm to 380 N/cm.

11. The water heater tank according to claim 9 or 10, wherein a crosslinking degree of the PEX inner lining layer ranges from 72% to 76%.

12. A method of preparing a water heater tank according to any one of claims 9 to 11, the method comprising:

    (S100) pre-treating a metal outer lining; and
    (S200) loading a crosslinkable polyethylene blend onto an inner side of the metal outer lining, placing into a rotational molding machine, and rotation-molding the crosslinkable polyethylene blend, to form a PEX inner lining layer on the inner side of the metal outer lining.

13. The method according to claim 12, wherein:

    a temperature of said rotation-molding ranges from 220°C to 280°C; and

a time of said rotation-molding ranges from 15 min to 35 min.

14. A water heater, comprising a water heater tank according to any one of claims 9 to 11 or a water heater tank prepared by a method according to claim 12 or 13.

**Patentansprüche**

1. Vernetzbare Polyethylenmischung, umfassend:

   80 bis 120 Gewichtsteile eines Polyethylen-Basis-Harzes;
   2 bis 15 Gewichtsteile eines polaren Materials;
   0,1 bis 5 Gewichtsteile eines Peroxid-Vernetzungsmittels;
   0,1 bis 1 Gewichtsteil eines Antioxidationsmittels; und
   0,5 bis 2 Gewichtsteile eines Desodorierungsmittels, wobei das Desodorierungsmittel eine Mischung aus einem organischen Säuresalz auf Manganbasis, einem organischen Säuresalz auf Zinkbasis und einem organischen Säuresalz auf Basis von Seltenen Erden umfasst.

2. Vernetzbare Polyethylenmischung gemäß Anspruch 1, wobei ein Massenverhältnis des organischen Säuresalzes auf Manganbasis, des organischen Säuresalzes auf Zinkbasis und des organischen Säuresalzes auf Basis von Seltenen Erden (55-65): (25-35): (8-12) beträgt.

3. Vernetzbare Polyethylenmischung gemäß Anspruch 1 oder 2, wobei das Peroxid-Vernetzungsmittel mindestens eines von Bis(tert-butyldioxyisopropyl)benzol, Diisopropylbenzolperoxid, 2,5-Dimethyl-2,5-di(tert-butylperoxy)hexan und Di-tert-butylperoxid umfasst.

4. Vernetzbare Polyethylenmischung gemäß einem der Ansprüche 1 bis 3, wobei das organische Säuresalz auf Manganbasis mindestens eines von Mangalanlaktat, Manganoctadecanoat und Manganneodecanoat umfasst.

5. Vernetzbare Polyethylenmischung gemäß einem der Ansprüche 1 bis 4, wobei das organische Säuresalz auf Zinkbasis mindestens eines von Zinklactat, Zinkcitrat und Zinkdiricinoleat umfasst.

6. Vernetzbare Polyethylenmischung gemäß einem der Ansprüche 1 bis 5, wobei das organische Säuresalz auf Basis von Seltenen Erden mindestens eines von Stearat von Seltenen Erden, Salicylat von Seltenen Erden und Citrat von Seltenen Erden umfasst.

7. Vernetzbare Polyethylenmischung gemäß einem der Ansprüche 1 bis 6, wobei das polare Material mindestens eines von Isocyanat-, Acrylat-, ungesättigtem Polyolefin mit Carbonsäure-, Anhydrid- oder Esterderivat-Pfropfungen, Epoxidharz und ungesättigtem Polyesterharz umfasst.

8. Vernetzbare Polyethylenmischung gemäß einem der Ansprüche 1 bis 7, wobei das Antioxidationsmittel mindestens eines von Pentaerythritoltetrakis[β-(3,5-di-tert-butyl-4-hydroxy-phenyl)propionat] und 4,4'-Thiobis-(6-tert-butyl-3-methyl)phenol umfasst.

9. Warmwasserbereiter-Tank, umfassend:

   eine Metallaußenauskleidung; und
   eine PEX-Innenauskleidungsschicht, die auf einer Innenseite der Metallaußenauskleidung angeordnet und fest mit dieser verbunden ist, wobei die PEX-Innenauskleidungsschicht durch thermische Vernetzung einer vernetzbaren Polyethylenmischung gemäß einem der Ansprüche 1 bis 8 ausgebildet ist.

10. Warmwasserbereiter-Tank gemäß Anspruch 9, wobei eine Schälfestigkeit zwischen der Metallaußenauskleidung und der PEX-Innenauskleidungsschicht im Bereich von 285 N/cm bis 380 N/cm liegt.

11. Warmwasserbereiter-Tank gemäß Anspruch 9 oder 10, wobei ein Vernetzungsgrad der PEX-Innenauskleidungsschicht zwischen 72 % und 76 % liegt.

12. Verfahren zum Herstellen eines Warmwasserbereiter-Tanks gemäß einem der Ansprüche 9 bis 11, wobei das Verfahren Folgendes umfasst:

(S100) Vorbehandeln einer Metallaußenauskleidung; und
(S200) Aufbringen einer vernetzbaren Polyethylenmischung auf eine Innenseite der Metallaußenauskleidung, Einlegen in eine Rotationsformmaschine und Rotationsformen der vernetzbaren Polyethylenmischung, um eine PEX-Innenauskleidungsschicht auf der Innenseite der Metallaußenauskleidung auszubilden.

13. Verfahren gemäß Anspruch 12, wobei:

eine Temperatur des Rotationsformens im Bereich von 220 °C bis 280 °C liegt; und
eine Dauer des Rotationsformens zwischen 15 min und 35 min liegt.

14. Warmwasserbereiter, umfassend einen Warmwasserbereiter-Tank gemäß einem der Ansprüche 9 bis 11 oder einen Warmwasserbereiter-Tank, der durch ein Verfahren gemäß Anspruch 12 oder 13 hergestellt wurde.


**Revendications**

1. Mélange de polyéthylène réticulable comprenant:

80 à 120 parties en poids d'une résine à base de polyéthylène;
2 à 15 parties en poids d'un matériau polaire ;
0,1 à 5 parties en poids d'un agent de réticulation peroxyde ;
0,1 à 1 partie en poids d'un antioxydant ; et
0,5 à 2 parties en poids d'un déodorant, dans lequel le déodorant comprend un mélange d'un sel d'acide organique à base de manganèse, d'un sel d'acide organique à base de zinc et d'un sel d'acide organique à base de terres rares.

2. Mélange de polyéthylène réticulable selon la revendication 1, dans lequel un rapport massique entre le sel d'acide organique à base de manganèse, le sel d'acide organique à base de zinc et le sel d'acide organique à base de terre rare est de (55-65): (25-35): (8-12).

3. Mélange de polyéthylène réticulable selon la revendication 1 ou 2, dans lequel l'agent de réticulation peroxyde comprend au moins l'un parmi le bis(tert-butyldioxyisopropyl)benzène, le peroxyde de diisopropylbenzène, le 2,5-diméthyl-2,5-di(tert-butylperoxy)hexane et le peroxyde de di-tert-butyle.

4. Mélange de polyéthylène réticulable selon l'une quelconque des revendications 1 à 3, dans lequel le sel d'acide organique à base de manganèse comprend au moins l'un parmi du lactate de manganèse, de l'octadécanoate de manganèse et du néodécanoate de manganèse.

5. Mélange de polyéthylène réticulable selon l'une quelconque des revendications 1 à 4, dans lequel le sel d'acide organique à base de zinc comprend au moins l'un parmi du lactate de zinc, du citrate de zinc et du diricinoleate de zinc.

6. Mélange de polyéthylène réticulable selon l'une quelconque des revendications 1 à 5, dans lequel le sel d'acide organique à base de terres rares comprend au moins l'un parmi du stéarate de terres rares, du salicylate de terres rares et du citrate de terres rares.

7. Mélange de polyéthylène réticulable selon l'une quelconque des revendications 1 à 6, dans lequel le matériau polaire comprend au moins l'un parmi du polyoléfine greffée avec du dérivé d'isocyanate, d'acrylate, d'acide carboxylique insaturé, d'anhydride ou d'ester, de la résine époxy et de la résine polyester insaturée.

8. Mélange de polyéthylène réticulable selon l'une quelconque des revendications 1 à 7, dans lequel l'antioxydant comprend au moins l'un parmi du tétrakis [β-(3,5-di-tert-butyl-4-hydroxy-phényl)propionate] de pentaérythritol et du 4,4'-thiobis-(6-tert-butyl-3-méthyl)phénol.

9. Réservoir de chauffe-eau, comprenant :

un revêtement extérieur métallique ; et

une couche de revêtement intérieur en PEX disposée sur et étroitement fixée à une face intérieure du revêtement extérieur métallique, la couche de revêtement intérieur en PEX étant formée par réticulation thermique d'un mélange de polyéthylène réticulable selon l'une quelconque des revendications 1 à 8.

10. Réservoir de chauffe-eau selon la revendication 9, dans lequel une résistance au pelage entre le revêtement extérieur métallique et la couche de revêtement intérieur en PEX est comprise entre 285 N/cm et 380 N/cm.

11. Réservoir de chauffe-eau selon la revendication 9 ou 10, dans lequel un degré de réticulation de la couche de revêtement intérieur en PEX est compris entre 72 % et 76 %.

12. Procédé de fabrication d'un réservoir de chauffe-eau selon l'une quelconque des revendications 9 à 11, le procédé comprenant :

   (S100) le prétraitement d'un revêtement extérieur métallique ; et
   (S200) le chargement d'un mélange de polyéthylène réticulable sur une face interne du revêtement extérieur métallique, le placement dans une machine de moulage par rotation et le moulage par rotation du mélange de polyéthylène réticulable, afin de former une couche de revêtement intérieur en PEX sur la face interne du revêtement extérieur métallique.

13. Procédé selon la revendication 12, dans lequel:

   une température dudit moulage par rotation est comprise entre 220 °C et 280 °C; et
   une durée dudit moulage par rotation est comprise entre 15 et 35 minutes.

14. Chauffe-eau, comprenant un réservoir de chauffe-eau selon l'une quelconque des revendications 9 à 11 ou un réservoir de chauffe-eau préparé par un procédé selon la revendication 12 ou 13.

S100

Pre-treating the metal outer
lining

Loading the crosslinkable polyethylene blend onto the inner
side of the metal outer lining, placing into a rotational
molding machine, and rotation-molding the crosslinkable
polyethylene blend, to form the PEX inner lining layer on
the inner side of the metal outer

S200

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109851901 A
- GB 232572017 T